# EUROPÄISCHE PATENTANMELDUNG

(11) **EP 3 623 015 A1**
(43) Veröffentlichungstag der Anmeldung: **18.03.2020**
(21) Anmeldenummer: 19000376.4
(22) Anmeldetag: 16.08.2019
(51) Int. Cl.: A62B 35/00, E06C 7/18, E06C 1/34, E06C 1/39, E04G 3/30, E04G 5/00, H02G 1/02, E04G 3/28

(54) **ARBEITSBÜHNE**

(30) Priorität: 12.09.2018 DE 202018004216 U
(71) Anmelder: Meißner Sicherheitstechnik GmbH, 89079 Ulm-Einsingen (DE)
(72) Erfinder: Liebler, Stefan, 89143 Blaubeuren (DE)
(74) Vertreter: Dziewior, Joachim

(57) **Zusammenfassung**

Die Arbeitsbühne dient zum Einsatz vorzugsweise für Montagearbeiten an Hochspannungsmasten (1) bzw. an Traversen von Hochspannungsmasten (1). Sie besteht aus einem Gehbalken (2) in bevorzugt gitter- bzw. leiterartiger Struktur mit einer am einen Ende angebrachten Anschlußvorrichtung (3) zur Befestigung am Masten (1), insbesondere in Form von wenigstens einer Einhängeöse, ferner aus einer Aufhängevorrichtung (4) am entgegengesetzten Ende zur Aufhängung an der Stromleitung (5). Weiter ist eine Auffangeinrichtung zur Sicherung des Monteurs vorgesehen, die von einem längs des Gehbalkens (2) verlaufenden Sicherungselement (8) gebildet ist, an dem ein mitlaufender, im Sicherungsfall arretierender Fallschutzläufer (9) geführt ist.

## Beschreibung

Die Erfindung betrifft eine Arbeitsbühne zum Einsatz vorzugsweise für Montagearbeiten an Hochspannungsmasten bzw. an Traversen von Hochspannungsmasten, bestehend aus einem Gehbalken in bevorzugt gitter- bzw. leiterartiger Struktur mit einer an einem Ende angebrachten Anschlussvorrichtung zur Befestigung am Masten, insbesondere in Form von wenigstens einer Einhängeöse, ferner mit einer Aufhängevorrichtung am entgegengesetzten Ende zur Aufhängung an der Stromleitung, sowie mit einer Auffangeinrichtung zur Sicherung des Monteurs.

Derartige Arbeitsbühnen dienen als Arbeitsfläche für Monteure, insbesondere bei Tätigkeiten im Bereich der an die Traversen von Hochspannungsmasten anschließenden Isolatoren. Dazu ist die Arbeitsbühne mit ihrem einen Ende an der Traverse befestigt, während das andere Ende über eine Aufhängevorrichtung, also beispielsweise durch ein Profilelement, an der Stromleitung aufgehängt ist.

Der Monteur ist hierbei über sein Höhensicherungsgerät an der Traverse des Hochspannungsmasten angeschlossen, was zur Folge hat, dass die Sicherungsleine ausreichend lang sein muss, damit der Monteur auch das dem Hochspannungsmasten abgewandte Ende der Arbeitsbühne erreichen kann. Im Falle eines Absturzes des Monteurs von der Arbeitsbühne bedeutet dies, dass nicht nur die Absturzhöhe wegen der Länge der Sicherungsleine relativ groß ist; problematischer ist die Tatsache, dass er hierbei an den Gitterstäben des Mastens anprallt.

Der Erfindung liegt daher die Aufgabe zugrunde, eine Arbeitsbühne der eingangs genannten Art so weiterzugestalten, dass nicht nur die Absturzhöhe verringert wird, sondern darüber hinaus ausgeschlossen ist, dass im Falle eines Absturzes ein Aufprall an den Gitterstäben des Mastes erfolgen kann. Gleichwohl soll hierdurch die Bewegungsfreiheit des Monteurs nicht beeinträchtigt werden.

Diese Aufgabe wird nach der Erfindung dadurch gelöst, dass die Auffangeinrichtung von einem längs des Gehbalkens verlaufenden Sicherungselement gebildet ist, an dem ein mitlaufender, im Sicherungsfall arretierender Fallschutzläufer geführt ist.

Der durch die Erfindung erreichte Vorteil besteht im Wesentlichen darin, dass der Monteur mit seinem Höhensicherungsgerät über eine kurze Sicherungsleine mit dem Fallschutzläufer verbunden ist, der längs des Sicherungselements verschiebbar ist, also keine Beeinträchtigung bei der Arbeit darstellt. Da der Fallschutzläufer in der Regel zum Masten hin beabstandet ist, besteht auch nicht die Gefahr, dass der Monteur im Sicherungsfall am Masten anprallt.

In bevorzugter Ausführungsform der Erfindung ist das Sicherungselement von einer Schiene aus vorzugsweise Aluminium oder Edelstahl gebildet, wobei die Schiene eine T-Nut zu ihrer Befestigung sowie ein T-Profil zum Anschluss des Fallschutzläufers aufweist. Die Anforderungen an eine solche Schiene bzw. Auffangeinrichtung sind in der DIN EN 795-D festgeschrieben.

Um eine Begrenzung des mitlaufenden Fallschutzläufers zu gewährleisten, ist die Schiene jeweils endseitig mit einem Anschlag bzw. einer Umkehrsicherung versehen, wobei die Umkehrsicherung auf der dem Masten zugewandten Seite vorgesehen ist, um dort den Fallschutzläufer einfädeln zu können.

Alternativ besteht jedoch auch die - technisch einfachere - Möglichkeit, dass das Sicherungselement von einem Drahtseil oder einem Textilseil gebildet ist.

Schließlich ist im Rahmen der Erfindung vorgesehen, dass das Sicherungselement seitlich neben dem Gehbalken angeschlossen ist.

Im Folgenden wird die Erfindung in einem in der Zeichnung dargestellten Ausführungsbeispiel näher erläutert; es zeigen:
- Fig. 1: die Arbeitsbühne nach der Erfindung,
- Fig. 2: eine perspektivische Ansicht des Gehbalkens,
- Fig. 3: in den Teilfiguren a bis c das von einer Schiene gebildete Sicherungselement

Die in der Zeichnung dargestellte Arbeitsbühne dient zum Einsatz vorzugsweise für Montagearbeiten an Hochspannungsmasten 1 bzw. an Traversen von Hochspannungsmasten 1.

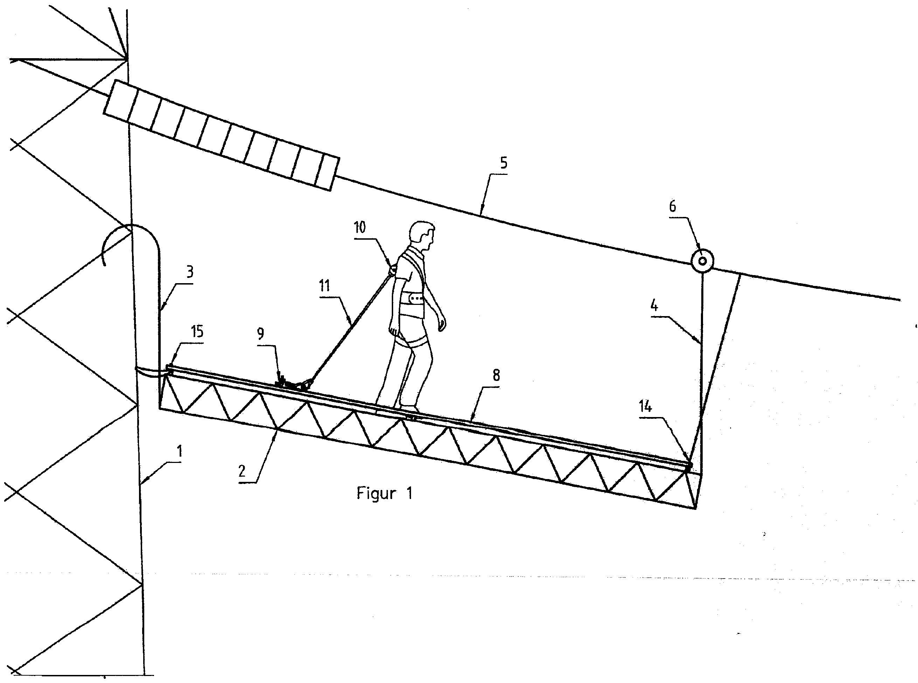

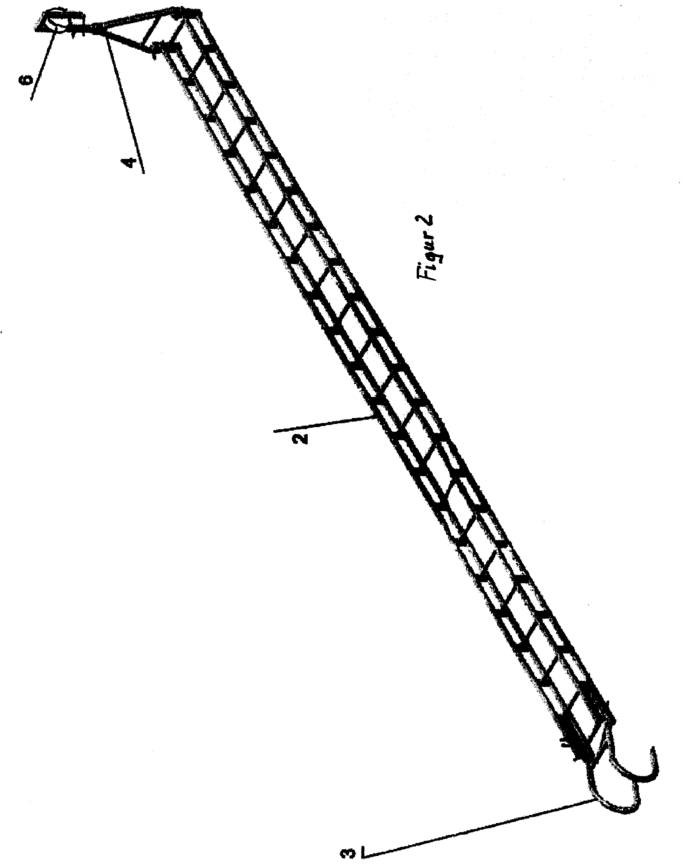

Im Einzelnen besteht die Arbeitsbühne aus einem Gehbalken 2, wie er in Figur 2 in perspektivischer Ansicht, jedoch ohne Auffangeinrichtung, zu sehen ist. Dieser Gehbalken 2 besteht - insbesondere aus Gewichtsgründen - bevorzugt aus einer gitter- bzw. leiterartigen Struktur. An seinem einen Ende ist eine Anschlussvorrichtung 3 zur Befestigung am Mast 1 angebracht, die insbesondere in Form einer Einhängeöse ausgebildet sein kann. Am anderen Ende ist eine Aufhängevorrichtung 4 für die Aufhängung an der Stromleitung 5 vorgesehen, die - wie aus der Figur 2 zu ersehen - eine Seilrolle 6 aufweist, wodurch eine Bewegung längs der Stromleitung 5 möglich ist. Zusätzlich erfolgt in der Regel noch eine zusätzliche Sicherung, zum Beispiel in Form eines Seils, die in Figur 1 mit der Bezugsziffer 7 versehen ist.

Zur Sicherung des Monteurs ist eine Auffangeinrichtung vorgesehen, die von einem längs des Gehbalkens 2 verlaufenden Sicherungselement 8 gebildet ist. An diesem Sicherungselement 8 ist ein freilaufender, im Sicherungsfall arretierender Fallschutzläufer 9 geführt, an dem die am Höhensicherungsgerät 10 des Monteurs befestigte Sicherungsleine 11 angeschlossen ist. Im unbelasteten Fall kann der Fallschutzläufer 9 längs des Sicherungselements 8 bewegt werden, während er im Sicherungsfall arretiert, so dass horizontale Bewegungsabläufe, insbesondere in Richtung zum Mast 1, verhindert werden.

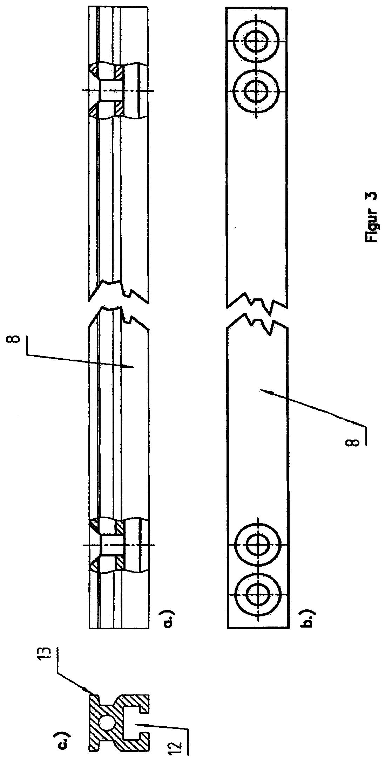

Wie aus der Figur 3 ersichtlich ist, besteht das Sicherungselement 8 aus einer Schiene aus vorzugsweise Aluminium oder Edelstahl, wobei die Schiene eine T-Nut 12 zur Befestigung am Gehbalken 2 aufweist, ferner ein T-Profil 13 zum Anschluss des Fallschutzläufers 9.

Die Schiene ist an ihrem einen Ende mit einem Anschlag 14 für den Fallschutzläufer 9 versehen; am anderen Ende ist eine Umkehrsicherung 15 angeordnet, über die der Fallschutzläufer 9 am T-Profil 13 der Schiene angeschlossen werden kann.

In einfacherer Ausgestaltung der Erfindung besteht aber auch die in der Zeichnung nicht näher dargestellte Möglichkeit, das Sicherungselement als Drahtseil oder Textilseil auszubilden.

Um eine Beeinträchtigung bei der Arbeit auf dem Gehbalken auszuschließen, ist das Sicherungselement seitlich neben dem Gehbalken 2 angeschlossen.

## Patentansprüche

1. Arbeitsbühne zum Einsatz vorzugsweise für Montagearbeiten an Hochspannungsmasten (1) bzw. an Traversen von Hochspannungsmasten (1), bestehend aus einem Gehbalken (2) in bevorzugt gitter- bzw. leiterartiger Struktur mit einer am einen Ende angebrachten Anschlußvorrichtung (3) zur Befestigung am Masten (1), insbesondere in Form von wenigstens einer Einhängeöse, ferner mit einer Aufhängevorrichtung (4) am entgegengesetzten Ende zur Aufhängung an der Stromleitung (5), sowie mit einer Auffangeinrichtung zur Sicherung des Monteurs, **dadurch gekennzeichnet, dass** die Auffangeinrichtung von einem längs des Gehbalkens (2) verlaufenden Sicherungselement (8) gebildet ist, an dem ein mitlaufender, im Sicherungsfall arretierender Fallschutzläufer (9) geführt ist.

2. Arbeitsbühne nach Anspruch 1, **dadurch gekennzeichnet, dass** das Sicherungselement (8) von einer Schiene aus vorzugsweise Aluminium oder Edelstahl gebildet ist, wobei die Schiene eine T-Nut (12) zu ihrer Befestigung sowie ein T-Profil (13) zum Anschluß des Fallschutzläufers (9) aufweist.

3. Arbeitsbühne nach Anspruch 2, **dadurch gekennzeichnet, dass** die Schiene jeweils endseitig mit einem Anschlag (14) bzw. einer Umkehrsicherung (15) versehen ist.

4. Arbeitsbühne nach Anspruch 1, **dadurch gekennzeichnet, dass** das Sicherungselement (8) von einem Drahtseil oder einem Textilseil gebildet ist.

5. Arbeitsbühne nach einem der Ansprüche 1 bis 4, **dadurch gekennzeichnet, dass** das Sicherungselement (8) seitlich neben dem Gehbalken (2) angeschlossen ist.
